# EUROPEAN PATENT APPLICATION

(11) **EP 3 747 641 A2**
(43) Date of publication of application: **09.12.2020**
(21) Application number: 20178432.9
(22) Date of filing: 05.06.2020
(51) Int. Cl.: B29D 11/00, B24B 13/005

(54) **METHOD AND APPARATUS FOR MANUFACTURING OPTICAL LENSES**

(30) Priority: 07.06.2019 DE 102019004000; 14.06.2019 DE 102019004145; 27.06.2019 DE 102019004489
(71) Applicant: Schneider GmbH & Co. KG, 35112 Fronhausen (DE)
(72) Inventor: HUTTENHUIS, Stephan, Dr., 35096 Weimar-Niederweimar (DE); PATTON, Agnes, 35096 Weimar-Roth (DE)
(74) Representative: Von Rohr Patentanwälte Partnerschaft mbB

(57) **Abstract**

A method is proposed for manufacturing lenses (2), in particular eyeglass lenses/spectacle lenses (2), wherein the lenses (2) are blocked for processing/machining on one block side (2A) and are provided with a removable protective layer (5A) before the blocking. In particular, the protective layer (5A) is applied by rotation coating and is formed from an adhesive (28) which is cured by means of electromagnetic radiation (U). According to a further aspect, an apparatus (23) for manufacturing lenses is proposed, wherein the apparatus (23) comprises a receiving station (34) for receiving lenses (2), a delivery station (68) for delivering lenses (2), one or more work stations (34-37) and a handling device (38) for handling the lenses (2).

## Description

The present invention relates to a method and an apparatus for manufacturing optical lenses, in particular spectacle lenses/eyeglass lenses.

Lenses, in particular spectacle lenses, are usually blocked for processing/machining on a so-called block piece as a holder by means of a so-called block material, i. e. with one finished or still to be processed/machined side connected positively and/or force-lockingly to the block piece and thus fastened/attached and/or held to the block piece. The block piece serves to hold the lens fastened - i. e. blocked - to it very precisely and in a defined manner for several or more processings/processing operations. The lens is then de-blocked, i. e. removed/detached from the block piece. With a view to low-cost lens production, this should be done in a simple way efficiently and quickly. According to the invention, "blocking" is understood to be the temporary fastening of a lens for a processing/machining.

As block material, alloys with low melting temperature and thermoplastics, i. e. thermoplastic materials, or non-thermoplastic materials, especially curing/hardening adhesives/glues, but also adhesive tapes or the like can be used. Depending on the block material used, there are different requirements and/or courses of methods for de-blocking, i. e. removing/detaching the lens from the block piece and/or block material.

The term "spectacle lenses" refers to optical lenses and/or lens preforms (blanks) for spectacles made of the commonly used transparent materials, such as plastic (e.g. polycarbonate, CR-39, Hi-Index) or mineral glass, and with any (pre)shape of the peripheral edge of the lens and/or the lens preform.

In the following, the term "lens" is used both for a lens (a blank and/or lens preform) which is still to be processed/machined on both optically effective sides (back surface and front surface) and for a lens which is only to be processed/machined on one optically effective side (back surface or front surface) and/or which is completely preformed on one optically effective side (back surface or front surface). However, a lens within the meaning of the present invention may also be any other intermediate product for the manufacturing/manufacture of spectacle lenses. For example, so-called half shells can be provided with a polarization filter as intermediate products and then joined to form a blank and/or lens preform.

The blocking of the lens to be processed takes place on a - usually curved and/or convex - flat side, which is also called the block side. If the block side has already been preformed, it is usually protected by a protective layer/coating, such as a foil or lacquer, before the actual blocking with the block material takes place. The protective layer thus prevents the block material from directly reaching the (completely preformed) block side of the lens, so that the block material only reaches the protective layer. This can also be regarded as an indirect blocking.

The present invention deals in particular with the generation and application of a protective layer in the aforementioned sense for the blocking, wherein a preferably automated process with high throughput at low cost and uniform protective layer thickness is to be achieved or made possible.

Despite alternative suggestions, up to now a foil/film is usually glued or applied as a protective layer to the block side of the lenses to be processed, against which blocking is performed with a metal alloy as block material. Although the application of a foil as a protective layer can be automated, it is technically complex and always associated with the problems of undesired formation of wrinkles or waves/undulations, depending on the curvature and/or shapes of the block side.

The DE 100 17 363 A1 discloses a method for the automatic application of a protective lacquer to spectacle lens blanks, wherein the spectacle lens blanks lie on a transport carrier and are conveyed past underneath an application system for the protective lacquer at a constant speed. Heat sources and/or infrared radiators are used to preheat and dry the spectacle lens blanks. In this way removable protective layers are formed on the spectacle lens blanks for subsequent blocking. However, this method does not allow an optimal throughput at low cost and defined design of the protective layer.

EP 2 011 604 A1 discloses a method for blocking a lens preform using a UV-curable polymer material as block material. The lens preform is thus blocked and/or fastened to a block piece using the UV-curable block material. In this method, however, the UV-curable material is not used as a protective layer between the lens preform and the block material, and the block material is not applied by rotation coating.

The present invention is based on the objective to provide an improved method and an improved apparatus for manufacturing lenses, preferably wherein a particularly efficient course of the method is made possible during the application of a protective layer, in particular during the blocking and/or processing of optical lenses, and/or wherein the formation of a defined protective layer is made possible with a low material input, and/or wherein the apparatus is characterized by a compact construction.

The above object is solved by a method according to claim 1 or by an apparatus according to claim 7. Advantageous further embodiments are subject of the subclaims.

One aspect of the present invention is that the protective layer is applied by rotation coating - in particular from below and/or against gravity. For this purpose, the material forming the protective layer is applied to the lens in liquid form and distributed by rotating the lens and/or the centrifugal forces generated by the rotation. This allows a particularly thin and uniform and/or defined protective layer to be designed. This is beneficial for an efficient course of the method and a defined blocking and processing of the lenses.

Rotation coating according to the invention is preferably carried out before one or more method steps and/or manufacturing steps, for example before blocking the lens on a block piece and/or before applying a block material. However, the protective layer can also be applied for transport and/or storage purposes.

Compared to coatings/layers which are applied after blocking of the lens on a block piece and/or after a geometrical processing of the lens, in particular after a polishing and/or cleaning, and/or for (permanent) optical refinement of the lens, the thickness of the protective layer applied according to the invention is thicker, in particular by a factor of more than 20, 30 or 40. Furthermore, the protective layer applied according to the invention preferably has no specific and/or substantial optical effects. Furthermore, the protective layer applied according to the invention is preferably removable.

According to another aspect of the present invention, which can also be realized independently, the protective layer is preferably formed by an adhesive which is cured before the blocking and/or application of the block material. Since adhesives adhere particularly well, a good connection with the block side of the lens is supported. This is beneficial to an efficient course of the method and a defined blocking and processing of the lenses.

The preferred adhesive for forming the protective layer is one that can be cured by means of electromagnetic radiation, especially UV radiation. To form the protective layer, the adhesive is/can be cured by means of electromagnetic radiation and/or UV radiation, especially preferred in the case of a rotating lens. This enables a particularly fast and defined curing. This is beneficial for an efficient course of the method and a defined blocking and processing of the lenses.

It is particularly preferred that the adhesive and/or the protective layer is cured before the blocking and/or application of the block material in an inert atmosphere and/or under inert gas, particularly preferably in an atmosphere which consists at least substantially of argon. Alternatively or additionally, the inert atmosphere may be formed essentially by nitrogen and/or carbon dioxide and/or a mixture of argon, nitrogen and/or carbon dioxide. Tests have comprised that in this way optimum properties of the protective layer can be easily achieved.

It has been found that an adhesive applied to the lens by rotation coating and applied by means of electromagnetic radiation forms a particularly thin and durable protective layer for the lens. The adhesion and durability of the protective layer is additionally improved by curing in an inert atmosphere and/or with a rotating lens.

If necessary, the protective layer can also be subjected to plasma irradiation after curing to ensure that the block material adheres particularly well to the protective layer.

The electromagnetic radiation preferably comprises a wavelength of more than 100 nm, preferably more than 200 nm, especially more than 280 nm, and/or less than 480 nm, preferably less than 450 nm, especially less than 430 nm, wherein the preferred wavelength depends on the choice of photoinitiator.

According to a particularly preferred aspect of the present invention, an adhesive is thus preferably used for blocking lenses, wherein the protective layer is formed by the adhesive which is cured by electromagnetic radiation, in particular UV radiation, before the blocking and/or application of the block material. This is beneficial for an efficient course of the method and a defined blocking and processing of the lenses.

According to another aspect of the present invention, which can also be realized independently, a proposed apparatus for manufacturing a lens and/or for applying a removable protective layer to a block side of a lens is characterized in particular by a holder for holding the lens in rotation with the block side preferably facing downwards and an application device for applying an adhesive for forming the protective layer and a curing device for curing the protective layer formed from the adhesive by electromagnetic and/or UV radiation. This is beneficial to an efficient course of the method and a defined blocking and processing of the lenses.

Particularly preferably, the apparatus is additionally equipped with a heating device for preheating the adhesive, the application device, a nozzle, a work space and/or the lens to be coated. The viscosity of the adhesive can be reduced by the heating device.

According to a further aspect of the present invention which can also be realized independently, a proposed installation for processing lenses is characterized in particular by an apparatus for applying a removable protective layer to a block side of a lens to be processed, a blocking apparatus, at least one processing apparatus and a de-blocking apparatus, wherein the apparatus for applying the removable protective layer comprises a holder for holding the lens in rotation with the block side facing downwards and an application device for applying a liquid material or adhesive to form the protective layer.

Another aspect of the present invention which can also be realized independently concerns a lens provided and/or blocked with a protective layer, wherein the protective layer is formed from a cured adhesive having a uniform thickness of less than 0.5 mm, in particular less than 0.2 mm. This is beneficial to an efficient course of the method and a defined blocking and processing of the lenses.

According to a further aspect which can also be realized independently, the present invention concerns a method for manufacturing a lens, in particular a spectacle lens, in which a first flat side of the lens is manufactured, in particular processed and/or cast, and (subsequently) coated with a - in particular permanent and/or non-removable - layer/coating and in which a second flat side of the lens is temporarily provided with a cover layer/cover coating for the (permanent) coating of the first flat side.

In particular, the cover layer is a different layer/coating than the protective layer described earlier. The cover layer is preferably applied only after the protective layer has been removed from the lens. However, depending on the process sequence, the cover layer could also be used as a protective layer and vice versa.

The term "protective layer" is used in particular for a removable/detachable and/or temporary layer, by means of which a second flat side and/or block side of the lens is coated during a processing operation/processing for shaping and/or a casting of the first flat side of the lens. The protective layer is thus used to protect the lens during a processing for shaping, a casting and/or to protect the block side of the lens. In particular, the protective layer is used to protect the block side of the lens from damage before the blocking, such as scratching.

The term "cover layer" is used to describe a removable and/or temporary layer used to cover a second flat side of the lens during a coating on the first flat side of the lens. The cover layer is preferably used to prevent unwanted coating of the second flat side during coating of the first flat side.

Furthermore, the terms "protective layer" and "cover layer" refer to layers that are temporarily applied to the lens and/or are removable from the lens and/or by a manufacturing method is used to remove them. In contrast, a "coating" of a lens means the application of a permanent and/or non-removable/non-detachable coating to the lens, in particular a coating for optical refinement, for example the application of a so-called "hard coating" to give the lens and/or the spectacle lens a scratch resistance, or other permanent coatings to improve the (optical) properties of the lenses, for example anti-reflection layers or coatings which prevent or reduce fogging of the lens and/or the spectacle lens.

However, the protective layer and/or cover layer can also be applied for protection during other method steps and/or for the protection during the storage and/or the transport. For example, intermediate products for lens manufacture/manufacturing, such as half shells, can also be provided with such a protective layer and/or cover layer.

The protective layer and the cover layer are preferably applied by the same method and are preferably designed identically or identically. Therefore, unless otherwise stated, the preceding and following statements on the properties of the protective layer and on the application and removal of the protective layer preferably also apply to the cover layer and vice versa.

Preferably, the second flat side of the lens is temporarily provided with the protective layer for processing (in a shaping manner) of the first flat side. This can prevent damages to the second flat side during the processing of the first flat side.

It is particularly preferred to block the second flat side for the processing of the first flat side by means of a block material on a block piece and to de-block it again from the block piece after the processing, wherein the second flat side is provided with the protective layer before the blocking.

It is preferred that the protective layer is removed (immediately) after the manufacturing and/or processing of the first flat side and/or after de-blocking and/or (immediately) before coating of the first flat side.

In principle and/or as a function of the manufacturing method, it is conceivable to only once temporarily coat the lens when manufacturing it and/or to retain and/or not remove the protective layer after processing in a shaping manner and/or after de-blocking in order to use the protective layer as a cover layer for the side not to be coated also when coating the lens (after the processing in a shaping manner).

However, it is possible that after processing in a shaping manner the protective layer is no longer intact, so that the (damaged) protective layer cannot provide sufficient cover/protection of the side not to be coated. It is therefore advantageous to remove the protective layer and to apply a new cover layer to prevent coating of the side not to be coated.

It is therefore particularly preferred to apply the cover layer after manufacturing and/or processing (in a shaping manner) of the first flat side and/or (immediately) after the removal of the protective layer, especially on the same flat side where the protective layer was previously applied.

The cover layer is preferably removed again immediately after the coating of the first flat side.

A further aspect of the present invention which can also be realized independently relates to an apparatus for manufacturing lenses, in particular spectacle lenses, with a receiving station for receiving lenses, a delivery station for delivering lenses, one or more work stations for manufacturing, in particular coating, of lenses and a handling device for handling the lenses in the apparatus and for transporting the lenses between different stations of the apparatus.

The handling device and/or a preferably at least substantially vertical rotary axis that is provided for the rotation of the handling device, in particular a lens carrier thereof, is preferably arranged - at least substantially - centrally between and/or equidistant from and/or surrounded/encircled by several stations, in particular the receiving station, the delivery station and/or the work stations.

In other words, it is preferred that several stations, in particular the receiving station, the delivery station and/or one or more work stations, are arranged on a circular path and/or a section of a circular path around the handling device, in particular its vertical rotary axis, and/or encircle/surround at least partially the handling device, in particular its vertical rotary axis. This allows a fast, efficient and/or easy handling of the lenses. In particular, this allows a particularly simple design of the stations and/or the handling device. Furthermore, in this way a particularly compact apparatus can be realized.

The handling device preferably comprises a lens carrier for the lenses, which can be rotated around/about the rotary axis. The rotary axis is preferably vertical. In this way, the lenses can be transported from one of the stations to a downstream additional station and/or moved on a circular path by rotating the lens carrier around/about the rotary axis. This is beneficial for short transport times, a simple and effective handling of the lenses and a compact design of the handling device and/or of the apparatus.

The lens carrier is preferably designed star-shaped, cross-shaped and/or in the shape of a watch hand. In principle, this can also be realized independently of the fact that the lens carrier can be rotated around the rotary axis.

The lens carrier preferably comprises or consists of several, in particular at least four, in particular elongated, arms which are in particular arranged radially to the rotary axis of the handling device. Preferably, neighboring/adjacent arms of the lens carrier are each arranged at equal angles to one another, particularly preferred wherein the sum of the angles between the arms and/or the longitudinal axes of the arms is 360°. For example, the neighboring arms of a lens carrier with four arms are preferably arranged at an angle of 90° to each other. In a lens carrier with six arms, the neighboring arms would accordingly preferably be arranged at an angle of 60° to each other.

The arms of the lens carrier preferably comprise one or more holders each for holding a lens and/or a lens pair. The holder(s) is/are particularly preferred arranged on a lower side of the respective arm and/or designed for rotatably/rotationally holding a lens and/or a lens pair.

In particular, each arm connects a holder to the rotary axis of the lens carrier.
In principle, "star-shaped" and/or "cross-shaped" and/or "in the shape of a watch hand" relates to the shape of theoretical/virtual lines of connection between each position/area of the handling device where it is designed to hold lenses, in particular the holder, and the rotary axis of the handling device.

It is possible that the lens carrier is of any shape, in particular a circular shape, a disk shape and/or a flat shape, preferably wherein the holders are arranged around the rotary axis, in particular directly and/or indirectly, on the lens carrier.

The lens carrier preferably comprises at least one covering for covering work stations. Particularly preferred, each arm and/or each holder comprises a covering for covering work stations. This is particularly advantageous if one or more work stations are designed for rotation coating and/or for curing a layer, such as in particular the protective layer or cover layer, by means of electromagnetic radiation.

Usually, such work stations require that the respective station is covered during the work step, e.g. rotation coating and/or curing, in order to restrict and/or enclose a work space of the respective work station. The use of coverings on the lens carrier is therefore beneficial for a compact design and a simple and/or fast course of the method.

The receiving station preferably comprises a turning device for turning the lenses, in particular around a horizontal axis and/or around 180°. Alternatively or additionally the delivery station (also) comprises such a turning device for turning the lenses.

The receiving station preferably comprises a centering device for centering the lenses. This ensures that the lenses are gripped and/or held centered in the apparatus. This is beneficial for an optimal result during processing in the work stations.

Preferably, one of the work stations is designed for application of a protective layer and/or cover layer by rotation coating, in particular as described before. Furthermore, preferably another of the work stations is designed for curing the protective layer and/or cover layer by means of electromagnetic radiation, in particular UV radiation. In other words, the apparatus according to the invention is preferably designed to carry out the method described for manufacturing lenses, in particular for application of a protective layer and/or cover layer to the lenses.

The apparatus may comprise one or more heating devices for preheating the lenses. Alternatively or additionally the heating device and/or the heating devices are designed for preheating an adhesive, an application device for the adhesive, a pump for the adhesive, a chamber/prechamber, a nozzle, in particular a nozzle tip, and/or a work space. In this way, the application of the protective layer and/or cover layer can be simplified and optimized.

The apparatus preferably comprises a conveying device for conveying transport carriers for the lenses from the receiving station to the delivery station during processing and/or coating of lenses in the apparatus.

The lenses are particularly preferred to be first transported to the apparatus in transport carriers and then handed over to the apparatus and/or receiving station. During the processing and/or coating of lenses in the apparatus, the transport carrier from which the lenses were removed is preferably transported further to the delivery station and, after processing and/or coating in the apparatus, the lenses are again deposited in a transport carrier, preferably in the same transport carrier from which they were previously removed.

The aforementioned and following aspects and features of the present invention can be combined with each other as desired, but can also be realized independently of each other.

Further aspects, features, advantages and characteristics of the present invention result from the claims and the following description of a preferred embodiment based on the drawing. It shows:
- Fig. 1: a schematic section of a blocked lens;
- Fig. 2: a schematic illustration of a proposed apparatus for manufacturing a lens;
- Fig. 3: a schematic section of a first work space and/or a first work station of the proposed apparatus for application of a protective layer;
- Fig. 4: a schematic section of a second work space and/or a second work station of the proposed apparatus for curing the protective layer; and
- Fig. 5: is a schematic illustration of a proposed installation with several processing apparatuses.

In the figures, the same reference marks are used for identical or similar components and devices, wherein the same or corresponding advantages and characteristics result, even if a repeated description is omitted.

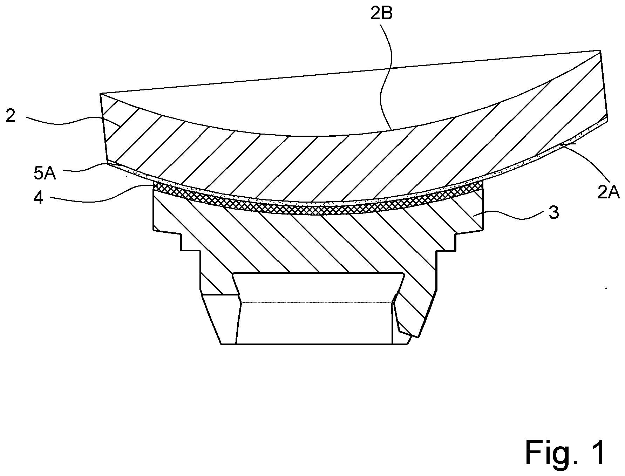

Fig. 1 shows in a schematic section a proposed lens 2, which is blocked, i. e. temporarily fastened, on an associated block piece 3 by means of a block material 4.

Particularly preferred, lens 2 is a so-called spectacle lens, i. e. a lens for spectacles.

The lens 2 is preferably made of plastic, but can also be made of glass or the like if necessary.

Lens 2 preferably comprises a diameter of several centimeters, especially more than 3 cm.

The block piece 3 is designed in particular for clamping with a defined rotational position for processing the associated lens 2.

The block material 4 is particularly preferred a thermoplastic, as described in particular in WO 2011/018231 A1. In principle, however, it can also be an alloy with a low melting point or any other material, for example an adhesive, an adhesive strip or the like.

As proposed, a protective layer 5A is arranged or provided on the side facing the block material 4 and/or block piece 3 and/or block side 2A of lens 2. Preferably the block side 2A is designed convex.

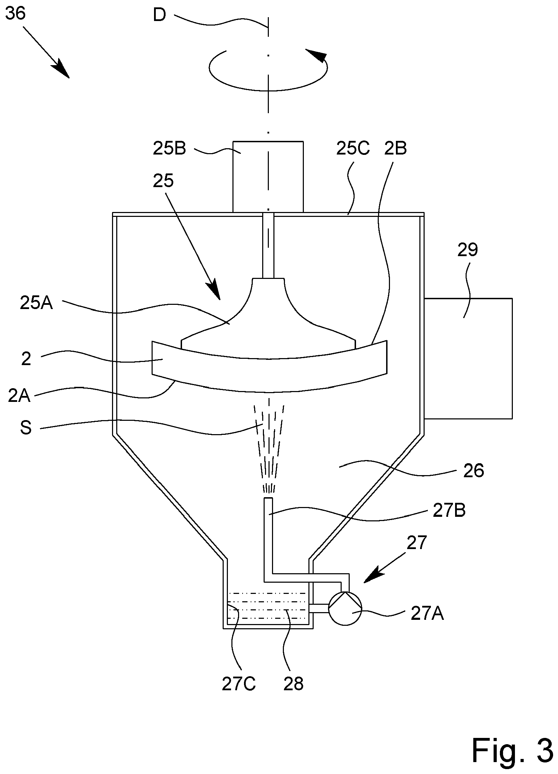

The protective layer 5A is preferably formed by an adhesive 28 (indicated in Fig. 3) which is and/or has been cured before the blocking and/or application of the block material 4.

The adhesive 28 can and/or is particularly preferred cured and/or cured by electromagnetic radiation, especially UV radiation U or visible light.

The wavelength of the radiation and/or light used for curing/hardening is preferably more than 100 nm, more preferably more than 200 nm, especially more than 280 nm, and/or less than 500 nm or 480 nm, more preferably less than 450 nm, especially less than 430 nm.

In particular, the wavelength is in the range 200 nm to 380 nm or in the range 350 nm to 450 nm. Light and/or radiation with such a wavelength can be generated, for example, by mercury lamps/radiators, lasers or LEDs. However, it is also possible to cure/harden the adhesive 28 by means of particle radiation, electron radiation and/or gamma radiation.

Preferably the energy density of the radiation and/or light used for curing is more than 5 W/cm² or 7 W/cm² and/or less than 12 W/cm² or 10 W/cm², in particular at least substantially 7.8 W/cm², with a distance between the radiation source and/or light source and the lens and/or lens surface of at least 2 mm and/or at most 4 mm. In particular, the energy density of the radiation and/or light used for curing is more than 1 W/cm² and/or less than 4 W/cm² at a distance between radiation and/or light source and lens and/or lens surface of more than 30 mm.

The protective layer 5A preferably comprises a thickness of less than 1 mm, in particular less than 0.5 mm, very particularly preferred less than 0.2 mm. Preferably the thickness of the protective layer 5A is more than 10 µm. The range of 50 µm to 200 µm is particularly preferred.

The protective layer 5A comprises a preferably at least substantially regular and/or uniform thickness.

The thickness of the protective layer 5A preferably varies by less than +/- 0.03 mm.

The protective layer 5A is applied in particular by rotation coating, as explained in more detail below.

The protective layer 5A is preferably formed and/or manufactured from an adhesive 28, particularly preferred a UV adhesive, i. e. an adhesive 28 cured by UV radiation U.

In particular, here the adhesive 28 is thus not used to connect and/or fasten two and/or several additional elements, in particular the lens 2 with and/or to the block piece 3 and/or block material 4, but to produce the protective layer 5A, preferably wherein the bonding/adhering properties of the adhesive 28 are only of minor or secondary importance. Preferably, the property that the adhesive 28 can be cured by means of electromagnetic radiation, in particular UV light or visible light, is primarily utilized here, so that the protective layer 5A with optimum properties can be formed in a simple manner.

Preferably, adhesive 28 and/or UV adhesive is a radically hardening, flexible and/or removable/detachable adhesive.

The protective layer 5A is removable and/or detachable from the block side 2A of lens 2, preferably without residue.

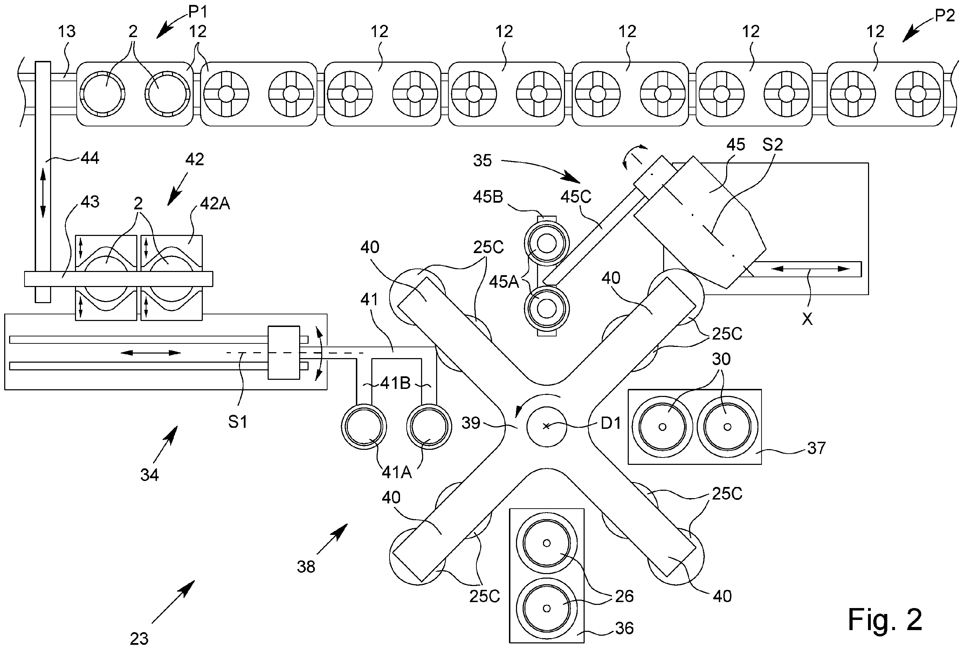

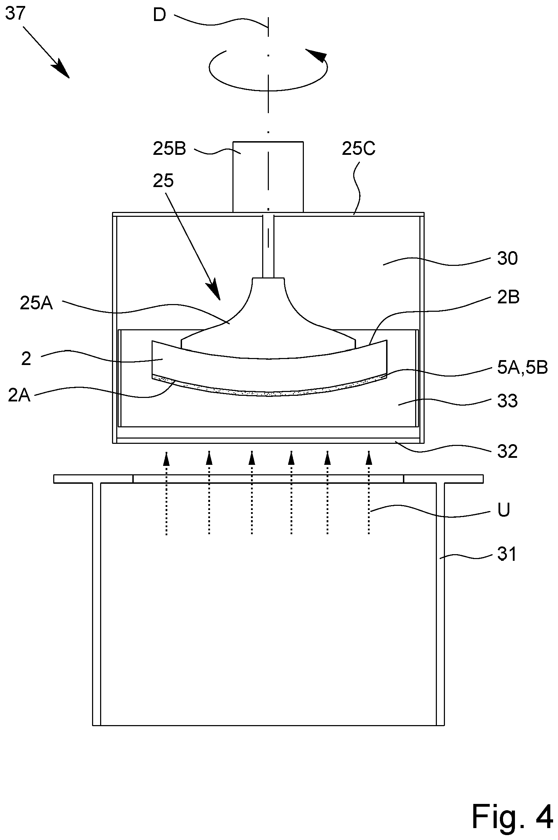

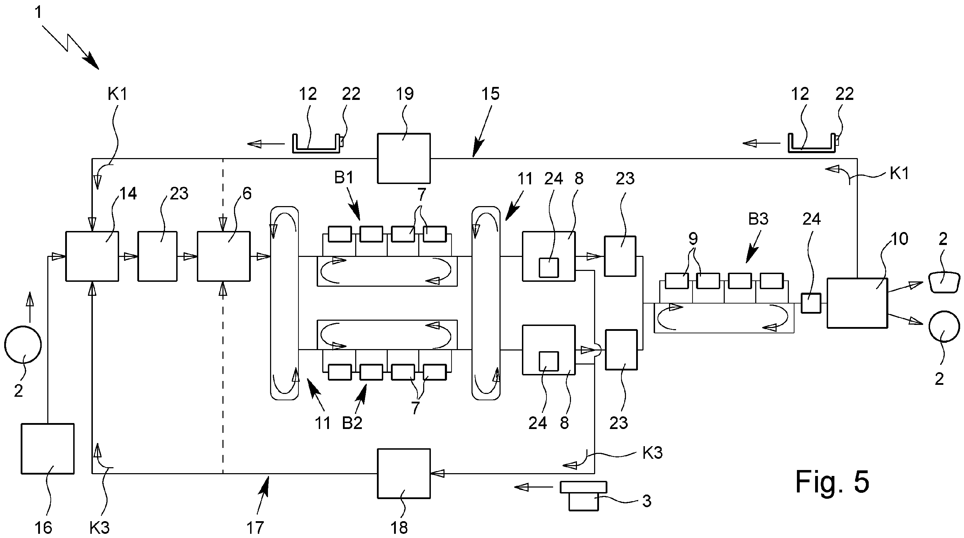

Fig. 2 shows in a schematic illustration a proposed apparatus for manufacturing lenses 2, in particular for application and/or curing of the removable protective layer 5A and/or the adhesive 28. Fig. 3 shows in a very schematic section a first work space 26 of apparatus 23. Fig. 4 shows a schematic section of a second work space 30 of the proposed apparatus 23 for curing the adhesive 28. Fig. 5 shows in a schematic illustration a proposed installation 1 for blocking and/or processing of optical lenses 2, i. e. a lens processing installation. In particular, the apparatus 23 forms a part of installation 1. Therefore, a particularly preferred design of the apparatus 23 is explained in more detail by means of Figs. 2 to 4.

As shown in Fig. 2 in particular, the apparatus 23 preferably comprises a receiving station 34 for receiving lenses 2, a delivery station 35 for delivering lenses 2 and/or one or more work stations 36, 37.

The receiving station 34 is designed to receive lenses 2 in/into the apparatus 23 and/or feed them to/into the apparatus 23.

The delivery station 35 is designed to deliver lenses 2 off/from the apparatus 23.

The work stations 36, 37 are designed to carry out work steps on lenses 2 and/or to process the lenses 2. In particular, the work stations 36, 37 differ from the receiving station 34 and the delivery station 35 in that in the work stations 36, 37 the properties of the lens 2 are changed by processing, while in the receiving station 34 and/or the delivery station 35 the lenses 2 are merely handled, e.g. conveyed, transported, swivelled, rotated or the like, without any further processing of the lenses 2 being carried out.

The term "manufacturing/manufacture" and/or "processing" basically means any process by which the lens 2 and/or a flat side 2A and/or 2B of the lens 2 and/or its properties are changed at least temporarily, in particular permanently. Examples of a processing in this sense are the application of a protective layer 5A and/or cover layer 5B, a processing in a shaping manner (for example turning and/or milling of a flat side of the lens 2 and/or the edge of the lens 2), a polishing of the lens 2, the application of permanent coatings/layers to the lens 2, and/or the removal of the protective layer 5A and/or cover layer 5B.

The first work station 36 is preferably designed for the application of the protective layer 5A and/or cover layer 5B in particular by rotation coating.

The first work station 36 preferably comprises at least one first work space 26, in particular for the application of the adhesive 28 for forming the protective layer 5A. Particularly preferred, the first work station 36 comprises two first work spaces 26, preferably of the same or identical design, so that two lenses 2 of a lens pair can be processed simultaneously. Details of the first work station 36 and/or the first work space 26 will be discussed later.

The second work station 37 is preferably designed to cure the protective layer 5A and/or cover layer 5B by means of electromagnetic radiation, in particular UV radiation U.

Basically, it is possible to operate two or more, especially all, of the work stations 34-37 simultaneously.

In particular, the first work station 36 and the second work station 37 may operate and/or be operated simultaneously, in particular in order to coat a first lens pair or lens 2 in the first work station 36 and to simultaneously harden a coated second lens pair or lens 2 in the second work station 37, wherein the second lens pair or lens 2 has previously been coated in the first work station 36.

The second work station 37 preferably comprises at least one second work space 30, in particular for curing the protective layer 5A formed from the adhesive 28. Particularly preferred, the second work station 37 comprises two second work spaces 30, preferably of the like or identical design, so that two lenses 2 of a lens pair can be processed simultaneously. Details of the second work station 37 will be discussed in more detail later.

The apparatus 23 preferably comprises a handling device 38 for the handling of the lenses 2 in the apparatus 23 and for the transport of the lenses 2 between different stations 34-37 of the apparatus 23.

The handling device 38 and/or a preferably at least substantially vertical rotary axis D1 of the handling device 38, in particular the lens carrier 39, is preferably arranged at least substantially centrally and/or in the middle of the apparatus 23, in particular in the middle between several of the stations 34-37.

Particularly preferred, the handling device 38, in particular the rotary axis D1, is arranged at least substantially in the middle between and/or equidistant from and/or encircled/surrounded by the receiving station 34, the delivery station 35, the first work station 36 and/or the second work station 37.

Alternatively or additionally, several stations 34-37, in particular the receiving station 34, the delivery station 35 and/or one or more work stations 36, 37, are placed in the vicinity of and/or close to the handling device 38.

In particular, some or all of the stations 34-37 are placed relative to the handling device 38 such that the stations 34-37 are arranged, in particular immovably, at least partially on an - in particular circular - path that at least partially overlaps with an - in particular circular - (handling) path of the handling device 38, especially when the handling device 38 is in motion and/or rotation.

The handling device 38, in particular the lens carrier 39, comprises the rotary axis D1, preferably wherein the rotary axis D1 defines/forms a central, main and/or a symmetry axis of the handling device 38, in particular the lens carrier 39.

The handling device 38 and/or a part thereof, in particular the lens carrier 39 explained below, is preferably rotatable around the rotary axis D1 and/or at least partially arranged symmetrically to the rotary axis D1.

The rotary axis D1 preferably runs at least substantially vertically, i. e. in a perpendicular direction with respect to gravity and/or at least substantially parallel to the gravity.

Preferably several stations, in particular the receiving station 34, the delivery station 35, the first work station 36 and/or the second work station 37, are arranged on a circular path and/or part of a circular path around the handling device 38, in particular the rotary axis D1.

The two (first) work spaces 26 of the (first) work station 36 are preferably arranged directly next to each other and/or lie on a common line running radially to the rotary axis D1.

The two (second) work spaces 30 of the (second) work station 37 are preferably arranged directly next to each other and/or lie on a common line running radially to the rotary axis D1.

The lines running radially to the rotary axis D1, on which the work spaces 26, 30 of the work stations 36, 37 and/or their central axes lie, preferably run orthogonally to each other.

The receiving station 34 and the second work station 37 are preferably arranged on radially opposing sides of the handling device 38.

The first work station 36 and the delivery station 35 are preferably arranged on radially opposing sides of the handling device 38.

Preferably, the receiving station 34, the first work station 36, the second work station 37 and the delivery station 35 are each arranged around the rotary axis D1 offset to each other by an angle of rotation of 90° around the rotary axis D1 and/or handling device 38 and/or along the circular path.

The handling device 38 preferably comprises a lens carrier 39 for the lenses 2.

The apparatus 23, in particular the handling device 38 and/or the lens carrier 39, preferably comprises one or more holders 25 for holding lenses 2 (not shown in Fig. 2). The holder(s) 25 is (are) preferably designed to hold lenses 2 during a processing in a work station 36, 37.

The holder(s) 25 is/are preferably designed to hold the lens 2 in rotation, especially with the block side 2A facing downwards. In the illustration example, the holder 25 preferably comprises a gripper 25A and in particular a rotary actuator 25B. The gripper 25A is preferably designed as a sucker/suction device.

By means of the rotary actuator 25B, the gripper 25A and/or the lens 2 can be rotated around a rotary axis D, as shown schematically in Fig. 3. The rotary axis D of the rotary actuator 25 preferably runs parallel to the rotary axis D1 of the handling device 38 and/or the lens carrier 39.

In particular, the apparatus 23 and/or the handling device 38, the lens carrier 39 and the stations 34-37 are designed and/or arranged in such a way that the lenses 2 can be transported from one of the stations 34-37 to a subsequent additional station 34-37 by rotation of the handling device 38 and/or the lens carrier 39 around the rotary axis D1.

The lens carrier 39 is preferably arranged above the receiving station 34, delivery station 35, first work station 36 and/or second work station 37.

A rotation of the lens carrier 39 is preferably effected by a rotary actuator of the handling device 38 which is not shown.

The handling device 38 and/or the lens carrier 39 is preferably designed to move and/or transport the lenses 2 on a circular path.

The stations 34-37 are preferably arranged relative to the handling device 38 and/or the lens carrier 39 in such a way that the lenses 2 can be positioned (exclusively) by rotating the lens carrier 39 around the rotary axis D1 vertically above the stations 34-37, in particular so that after a rotation of the lens carrier 39 exclusively a vertical movement of the grippers 25A and/or lenses 2 is required in order to feed the lenses 2 to the stations 34-37 and/or remove them from the stations 34-37.

The lens carrier 39 is preferably designed star-shaped, cross-shaped and/or shaped in the sense of the hands of a watch.

In particular, the lens carrier 39 comprises or consists of several arms 40, in particular arms 40 which are constructed in a like or identical manner.

The arms 40 preferably run radially and/or orthogonally to the rotary axis D1 and/or preferably extend horizontally in the apparatus 23. Preferably the arms 40 form a star or a cross, in particular wherein the rotary axis D1 forms the center and/or the axis of symmetry of the star and/or cross.

In particular, an arm 40 and/or the term "arm" relates to the direct line(s) of connection between a single holder 25 and the rotary axis D1. Preferably, the holder(s) 25 is/are arranged on arms 40, in particular wherein the arm(s) 40 is/are of an elongated form and/or comprise an elongated form.

Alternatively or additionally, the holder(s) 25 can be arranged directly or indirectly on the lens carrier 39, in particular wherein arms 40 are optional.

Particularly preferred, the lens carrier 39 comprises at least four arms 40. The arms 40 are preferably arranged at equal angles to one another, so that the same angle is present between two neighboring arms 40 in each case. The sum of the angles is preferably 360°. In the illustration example, the four arms 40 of the lens carrier 39 are arranged at an angle of 90° to each other.

The number of arms 40 preferably equals/corresponds to or is less or more than the number of stations 34-37. In this way it is possible to operate an optimized number of stations 34-37, a maximized number of stations 34-37 or even all stations 34-37 simultaneously especially with the handling device 38.

In particular, it might be possible to operate at least two, most preferred all, of the stations 34-37 by means of the handling device 38 simultaneously. For example, the stations 34-37 and/or the handling device 38 might simultaneously receive, deliver, handle, transport and/or manufacture, in particular process, machine, cast, coat and/or harden, several lenses 2.

The arms 40 of the lens carrier 39 preferably comprise one or more holders 25 for holding a lens 2 and/or a lens pair, particularly preferred two holders 25. The two holders 25 for holding a lens pair are preferably arranged directly next to each other, in particular in the radial direction in series/one behind the other.

The holders 25 are preferably designed identically, so that in the following only one holder 25 is described, wherein these designs preferably apply to all holders 25 of the lens carrier 39.

The holder 25 preferably comprises a gripper 25A for holding a lens 2. The gripper 25A is preferably designed as a sucker.

Especially preferred is that the holder 25 is arranged on a lower side of the respective arm 40 and/or the gripper 25A points vertically downwards. The holder 25 and/or gripper 25A is especially designed to hold the lens 2 centrally on the flat side 2B facing away from the block side 2A.

The gripper 25A can preferably be moved back and forth vertically.

A lens 2 is fed to a station 34-37 and/or a work space 26, 30 preferably by rotating the lens carrier 39 around the rotary axis D1 in such a way that the lens 2 is located directly above the station 34-37 and/or the work space 26, 30 and then moving the lens 2 to the station 34-37 and/or to/into the work space 26, 30 by sinking and/or lowering the gripper 25A.

Preferably, the lens 2 is held during the processing in a work space 26, 30 with the holder 25 and/or its gripper 25H, so that no handover of the lens 2 to another gripper 25H of the respective work station 36, 37 is necessary.

Preferably, the holder 25 comprises a shield and/or a covering 25C, in particular a plate-like one, by means of which at least the work space 26 of the first work station 36 and preferably also the work space 30 of the second work station 37 can be covered and/or enclosed.

The covering 25C can preferably be moved vertically back and forth together with the gripper 25A of the respective holder 25. Particularly preferred is to automatically enclose the work space 26,30 when the lens 2 is moved into the work space 26,30 with the gripper 25A.

The holder 25 and/or gripper 25A is especially designed to hold the lens 2 in the work space 26, 30 of the apparatus 23, particularly preferred during the processing of the lens 2 in the work space 26, 30.

The receiving station 34 is preferably designed to hold lenses 2 in the apparatus 23 and in particular to feed the lenses 2 to the handling device 38.

A conveying device 13 is preferably assigned to the apparatus 23, by means of which the lenses 2 and/or transport carriers 12 with the lenses 2 can be fed to the apparatus 23 and/or the receiving station 34. The conveying device 13 is preferably designed as a belt conveyor or chain conveyor.

Most preferred, the conveying device 13 extends linearly, in particular along the apparatus 23. However, the conveying device 13 can also form part of the apparatus 23.

The receiving station 34 preferably comprises a turning device 41 for the turning/turnover of lenses 2. The turning device 41 is preferably designed to turn the lenses through 180° and/or by pivoting them around a preferably at least substantially horizontal pivoting axis and/or axis S1.

A "turning" of a lens 2 is preferably understood to mean a movement of the lens 2 in which the directions to which the flat sides 2A, 2B point are each reversed. After turning, the preferred direction is that the flat side 2A points in the direction in which the flat side 2B previously pointed and vice versa.

Most preferred in the present invention is a turning in such a way that before the lens 2 is turned, one of the flat sides 2A, 2B points vertically upwards and the other of the flat sides 2A, 2B points vertically downwards. Thus, before the turning, one of the flat sides 2A, 2B represents an upper side of the lens 2 and one of the flat sides 2A, 2B represents a lower side of the lens 2.

During the turning, the lens 2 is preferably turned by 180°, so that the top and lower sides are reversed in relation to the position of the lens 2 before the turning.

As shown in fig. 1, the lens 2 usually comprises a convex side (in fig. 1 the lower flat side 2A) and a concave side (in fig. 1 the upper flat side 2B).

For the transport the lens 2 is usually placed with the concave side downwards in a transport carrier 12 so that it only rests on the edge of the lens 2 and damage to the flat sides 2A, 2B is prevented. Furthermore, as also shown in Fig. 1, the second flat side 2A is preferably the block side of lens 2. In order to provide the block side 2A of lens 2 (before the blocking) with the temporary protective layer 5A, it is therefore necessary to turn the lens 2 over before the gripper 25A grips it so that the block side 2A and/or the side to be provided with the protective layer 5A faces downwards during processing in work stations 36, 37.

In principle, however, the turning device 41 can also be omitted if no turning of lenses 2 is required.

The turning device 41 is preferably displaceable along the axis S1, in particular it can be moved back and forth. The axis S1 is preferably crosswise/transverse to the circular path on which the holders 25 and/or the lenses 2 held on the holders 25 move when the lens carrier 39 is rotated, and/or parallel to the conveying device 13.

Preferably the turning device 41 can be moved crosswise to the circular path.

The turning device 41 preferably comprises one or more, in particular two, grippers 41A. The grippers 41A are preferably designed as suckers/vacuum devices.

It is preferred that the grippers 41A are arranged offset to the axis S1 and/or on bars 41 B of the turning device 41 which run crosswise, in particular perpendicular/transverse, to the axis S1.

Preferably the receiving station 34 comprises a centering device 42 for centering the lenses 2. The centering device 42 is preferably arranged ahead of/preceding to the turning device 41.

The centering device 42 is preferably designed to center the lenses 2 after they have been removed from the conveying device 13 and/or from the transport carrier 12 and/or before a handover to the turning device 41 and/or the lens carrier 39. For this purpose, the centering device 42 preferably comprises two centering jaws 42A which can be displaced relative to one another.

Most preferred, the centering device 42 is designed for simultaneous centering of two lenses 2 of a lens pair and accordingly comprises two pairs of cooperating/collaborating centering jaws 42A. This is shown in particular in Fig. 2. In principle, however, other solutions for centering the lenses 2 are also possible.

In addition to the turning device 41 and, if necessary, to the centering device 42 the receiving station 34 preferably comprises a gripping device 43 with one or more grippers for gripping a lens 2 and/or a lens pair. The gripper(s) is/are preferably designed as a sucker.

The gripping device 43 is preferably designed to remove a lens 2 and/or a lens pair from a transport carrier 12 and to hand it over to the centering device 42 and/or the turning device 41. Preferably the gripping device 43 can be moved crosswise thereto, in particular perpendicular to the conveying device 13 and/or the axis S1. This can be done, for example, by arranging the gripping device 43 on a rail 44 running crosswise and/or perpendicular to the conveying device 13 and/or the axis S1 and being movable along this rail 44.

The gripping device 43 preferably comprises a bar, on a lower side of which the gripper(s) is/are arranged. The bar runs with its main extension direction preferably crosswise, in particular perpendicular to the rail 44.

The delivery station 35 preferably comprises a turning device 45 for turning the lenses 2. The turning device 45 is preferably designed to turn the lenses 2 by 180° and/or by pivoting around a preferably at least substantially horizontal pivot axis and/or axis S2.

As with the turning device 41, the turning device 45 can also be omitted if no turning of the lenses 2 is required.

The turning device 45 is preferably displaceable/movable along an axis X, preferably at least substantially horizontal, in particular it can be moved back and forth.

The axis X and the axis S2 of the delivery station 35 preferably run crosswise to each other, in particular at an angle of more than 20° and/or less than 60°.

The turning device 45 preferably comprises a gripper 45A for gripping a lens 2. The gripper 45A is preferably designed as a sucker. Most preferred, the turning device 45 comprises two grippers 45A, most preferred arranged side by side, for gripping a lens pair simultaneously.

Preferably the grippers 45A are arranged adjacent/next to each other on a first bar 45B.

The first bar 45B is preferably again arranged crosswise on a second bar 45C, in particular its end. The second bar 45C is preferably perpendicular to the pivot axis S2.

The first bar 45B is preferably arranged at an angle of more than 20° and/or less than 60° to the second bar 45C. Preferably, the angle between the bars 45B and 45C corresponds to/equals the angle between the axes X and S2.

By this, in particular shown in Fig. 2, arrangement of the axes X, S2, bars 45B, 45C and gripper(s) 45A relative to each other, it is achieved that the first bar 45B and/or the lens pair is/are rotated by 90° around a (not shown) vertical axis when pivoting the lenses 2 around the axis S2 and/or the alignment of the lenses 2 in the turning device 45 is changed in such a way that the lenses 2 can be handed over to the associated transport carrier 12. In this way a compact design is comprised.

A course of work for the processing of lenses 2 and/or for the application of the protective layer 5A preferably comprises the steps described below. For the sake of simplicity, the course of work for a lens 2 is described. However, the explanations also apply analogously to a lens pair, because preferably the lenses 2 are processed and/or coated in pairs in the apparatus 23, so that two lenses 2 and/or a lens pair pass through the same steps simultaneously.

First the lens 2 and/or the transport carrier 12 with the lens 2 is conveyed and/or transported preferably to a receiving position P1. The receiving position P1 is preferably assigned to the receiving station 34 and/or arranged in immediate vicinity to the receiving station 34.

The gripping device 43 is then positioned by moving along the rail 44 towards and/or above the lens 2 in such a way that it can be gripped by the gripper. Most preferred this is done by positioning the gripping device 43 and/or its gripper (directly) vertically above the lens 2.

The lens 2 is then gripped by the gripper and, if available, moved to the centering device 42. If no centering device 42 is provided, the lens 2 is moved with the gripper directly to the turning device 41.

The gripping device 43 then hands over the lens 2 to the centering device 42, if necessary, in which the lens 2 is centered for further processing.

Then lens 2 is preferably handed over to the turning device 41. In the illustration example, this is done by moving the turning device 41 along the axis S1 linearly to the centering device 42. Simultaneously with and/or prior to the movement of the turning device 41 to the centering device 42, the gripping device 43 is moved away again from the centering device 42, in particular linearly, so that the lens 2 can be gripped with the turning device 41 and/or its gripper 41A.

The lens 2 is then gripped with the gripper 41A of the turning device 41 and is moved by pivoting around the axis S1.

The turning device 41 is then moved to the handling device 38, in particular by linear displacement along axis S1.

For the handover the lens 2 to the handling device 38 and/or the lens carrier 39 and/or the holder 25, the lens carrier 39 is moved into a work position/working position, preferably by turning. This can be done before, during and/or after the movement of the turning device 41 to the handling device 38.

The work position is in particular the position in which the lens carrier 39 is located during the handover of lenses 2 from the turning device 41 to the lens carrier 39, the processing of lenses 2 in the first work station 36, the processing of lenses 2 in the second work station 37 and/or the handover of lenses 2 from the lens carrier 39 to the delivery station 35.

Due to the preferred cross- or star-shaped design and/or the symmetry of the lens carrier 39, the work position is preferably assumed/taken several times during one rotation around the axis D1, in the illustration example four times.

After the handover of the lens 2 from the receiving station 34 to the lens carrier 39, the lens carrier 39 is preferably rotated around the rotary axis D1 so that the lenses 2 are transported to the first work station 36. As soon as the lens 2 is vertically above the first work space 26 of the first work station 36 and/or the lens carrier 39 is in the work position again, the lens carrier 39 is stopped. The lens 2 is then processed in the first work station 36.

Then the lens carrier 39 is turned again until the lens 2 is vertically above the second work station 37 and/or the second work space 30 and/or the lens carrier 39 is in the work position again. The lens 2 is then processed in the second work station 37 and/or the second work space 30.

After the processing in the second work station 37, the lens carrier 39 is turned again until it is in the work position again. The lens 2 is then handed over to the delivery station 35, in particular the gripper 45A of the turning device 45. For this purpose, the gripper 45 is positioned vertically under the holder 25 by corresponding pivoting of the gripper 45A around the axis S2 and/or linear displacement of the turning device 45 along the axis X. This can be done before, during and/or after the rotation of the lens carrier 39 to the work position.

After the handover of the lens 2 to the delivery station 35 and/or turning device 45, the lens 2 is turned by pivoting around the axis S2, in particular by 180°. The turning device 45 is additionally moved along the axis X before, during and/or after the turning of the lens 2 so that the lens 2 is vertically positioned above a transport carrier 12 assigned to the lens 2.

Afterwards the lens 2 is handed over to the conveying device 13 and/or the transport carrier 12, in particular it is deposited in the transport carrier 12.

The transport carrier 12 is further conveyed, preferably by/with the conveying device 13, after the handover of the lens 2 to the apparatus 23 and/or receiving station 34, in particular during the processing of the lens 2 removed from the transport carrier 12 in the apparatus 23.

In particular, the transport carrier 12 is conveyed on so that it is in a delivery position P2 when the lens 2 has completely passed through the apparatus 23 and/or is to be handed over again to the conveying device 13 and/or the transport carrier 12, in particular by means of the delivery station 35 and/or turning device 45.

The delivery position P2 is preferably associated with the delivery station 35 and/or arranged in the immediate vicinity of the delivery station 35.

Preferably, as explained before, two lenses 2 and/or a lens pair are processed simultaneously in the apparatus 23 in the manner described above. In particular, each station 34-37 is designed for simultaneous handling and/or processing, in particular coating, of two lenses 2 and/or a lens pair.

In addition, preferably a simultaneous processing and/or handling of several lenses 2 and/or lens pairs is carried out in different stations 34-37 of the apparatus 23. In particular, the apparatus 23 is designed for simultaneously manufacturing and/or processing and/or handling several lenses 2 and/or lens pairs, which are successively handed over to the apparatus 23 and/or received in the apparatus 23, preferably in different stations 34-37.

In particular, when the apparatus 23 comprises four stations 34-37 and/or the lens carrier 39 comprises four arms 40, for example up to six lenses 2 and/or lens pairs can be picked up/held and/or processed simultaneously in the apparatus 23. With the device shown in Fig. 2, for example, a lens pair can be picked up simultaneously in the centering device 42, a lens pair can be held on the grippers 45A of the turning device 41, a lens pair can be held on the arm 40 pointing downwards to the left and/or on the arm 40 arranged between the receiving station 34 and the first work station 36, a lens pair can be held on the arm 40 facing downwards to the right and/or on the arm 40 located between the first work station 36 and the second work station 37, a lens pair can be held on the arm 40 facing upwards to the right and/or on the arm 40 located between the second work station 37 and the delivery station 35 and a lens pair can be held on the grippers 45A of the turning device 45 of the delivery station 35.

Accordingly, the conveying device 13 is preferably designed to convey several transport carriers 12 simultaneously, in particular in such a way that a transport carrier 12, from which a lens 2 and/or a lens pair has been removed in the receiving position P1, is located in the delivery position P2 when the previously removed lens 2 and/or the previously removed lens pair is to be delivered again to the conveying device 13 and/or the transport carrier 12.

The apparatus 23 and/or the first work station 36 preferably comprises an application device 27 for the application of a liquid material and/or adhesive 28 for the formation of the protective layer 5A.

In the example shown, the application device 27 preferably comprises a pump 27A and at least one nozzle and/or feed 27B, via which the material and/or the adhesive 28 can be applied, in particular sputtered or sprayed, onto the block side 2A to be provided with the protective layer 5A, as indicated schematically by the jet S in Fig. 3.

Preferably, the application device 27 is designed for the application of air pulses and/or is designed to apply, in particular to sputter or spray on, the adhesive 28 by one or more air pulses onto the lens 2, in particular the block side 2A. Preferably the application device 27 is equipped with a compressor (not shown) to compress air and/or to generate an air pulse.

By rotating the lens 2 around the rotary axis D, the material and/or adhesive 28 is distributed evenly on the block side 2A.

Preferably, the holder 25 and/or the rotary actuator 25B is designed in such a way that the lens 2 can first be accelerated to an initial rotational speed, in particular to at least substantially 1500 rotations per minute, and - at least along some rotations, for example for more than 2, 5, 10, 50 or 100 rotations - can be rotated at the initial rotational speed and can then be accelerated to at least one different rotational speed and rotated at this rotational speed. This rotational speed is preferably greater than the initial rotational speed, for example by (at least) a factor of 1.3, 1.6 or 2. In this way a more uniform distribution of the adhesive can be achieved.

Adhesive 28 is preferably applied at the initial rotational speed, in particular at least substantially 1500 rotations per minute, to lens 2 and/or block side 2A, in particular to allow for a more uniform application.

Preferably afterwards and/or (immediately) after the adhesive 28 has been applied, the rotational speed is increased, in particular by a factor of 1.3, 1.6 or 2, and/or a rotational speed of at least substantially 2000, 2500 or 3000 rotations per minute is set, in particular in order to distribute the applied adhesive 28 over the lens 2 and/or the block side 2A.

Excess material and/or excess adhesive 28 is preferably recovered and/or reused. In particular, the apparatus 23 and/or the first work space 26 is designed in such a way that the excess adhesive 28 is fed to a collecting area and/or tank 27C of the application device 27 and/or is collected there, in order to be dispensed again as required, in particular via the pump 27A. However, other constructive solutions are also possible here.

The apparatus 23 preferably comprises a heating device 29, only indicated schematically in Fig. 3, for preheating a nozzle of the applicator 27, the adhesive 28, the lens 2 and/or the first work space 26.

Work is most preferred carried out at temperatures of more than 35 °C or 40 °C and/or less than 60 °C or 50 °C, particularly preferably around 45 °C, in order to ensure the most defined viscosity possible and/or the most defined method conditions/process conditions possible during the application of the adhesive 28 and/or the protective layer 5A. The temperature is preferably set as a function of the adhesive 28.

The heating device 29 can, for example, achieve or enable the desired preheating and/or tempering by (thermal) conduction or radiation.

The apparatus 23 and/or the second work station 37 preferably comprises a second work space 30 shown in Fig. 4 for curing the protective layer 5A formed from the adhesive 28 by means of a curing device 31, in particular a UV radiator, i. e. by the action of UV radiation U. Thus, the curing can take place very quickly and in a defined manner without the adhesive 28 located in the first work space 26 curing.

Preferably the second work space 30 comprises a bottom 32 which is transparent to UV radiation U and a reflector 33 which reflects UV radiation U.

Preferably, the lens 2 is (also) rotated and/or accelerated to a curing rotational speed during the curing of the adhesive 28 and/or in the second work station 37 and/or in the second work space 30, in particular wherein the curing rotational speed is lower than the (initial) rotational speed during the application of the adhesive 28. Preferably the curing rotational speed is at most 70% or 50% of the initial rotational speed and/or at least substantially 500 rotations per minute. This comprises a particularly fast and/or low-stress curing of adhesive 28.

It has proved to be particularly advantageous when curing the adhesive 28 is carried out in an inert atmosphere, in particular in an argon atmosphere or an atmosphere of another noble gas or of nitrogen or carbon dioxide. The atmosphere is preferably composed essentially of argon, nitrogen and/or carbon dioxide.

In particular, the inert atmosphere comprises very little oxygen, preferably less than 10%, preferably less than 5%, particularly preferred less than 2% or none at all.

The inert atmosphere enables and/or supports reliable and/or tack free curing of the adhesive 28. When curing in air, the oxygen contained in the air can react with the adhesive 28 and thus - at least partially - prevent the polymerization and/or curing on the surface, so that a sticky film is formed and/or remains. This problem can be circumvented and/or avoided by using an inert atmosphere during curing.

Preferably, the adhesive 28 and/or UV adhesive is cured by (radical) polymerization, which is preferably induced, triggered or effected by UV light or visible light. Accordingly, adhesive 28 preferably comprises a monomer liquid that is curable by means of UV radiation U or visible light.

The adhesive 28, in particular a free-radically/radically curing adhesive 28, is preferably manufactured from or consists of one or more, in particular vinylically unsaturated/vinyl-unsaturated binders and/or one or more, in particular vinylically unsaturated monomers. Optionally or additionally, adhesive 28 may comprise one or more photoinitiators, adhesion promoters, reactive diluents and/or other additives, such as flow additives, etc.

Adhesive 28 can also be or comprise a composition of UV adhesive and a filler. In this way the properties of adhesive 28 can be improved and/or adapted to the requirements.

Preferably, the filling material is a non-polymerizing solid.

The properties of adhesive 28 can be changed, in particular improved or adapted, by the mixing ratio between UV adhesive and filling material. For example, the mixing ratio of UV adhesive and filling material can be used to reduce or control the heat generated during the curing of adhesive 28 and/or the occurrence of stresses, in particular thermal stresses, during the curing of adhesive 28. In this way, the thermal and mechanical stress on the lens 2 when the adhesive 28 and/or the protective layer 5A is cured can be held low or avoided.

Furthermore, by adding the filling material to the UV adhesive 28, it is possible to use a smaller amount of UV adhesive. As UV adhesive 28 is a relatively expensive chemical, costs can be reduced in this way.

Preferably, the weight percentage of the filling material in adhesive 28 is more than 10%, preferably more than 30%, and/or less than 70%, preferably less than 50%. These mixing ratios have proven to be particularly advantageous with regard to the desired properties of adhesive 28.

The adhesive 28 may be colored and/or is colored with dyes, in particular fluorescent substances, and/or pigments. Preferably the dye and/or pigment content is low in order to maintain the reactivity of adhesive 28. Preferably the proportion by weight of dyes and/or pigments in adhesive 28 is less than 10%.

Most preferred is to cover and/or enclose the first work space 26 or any other work space in each case by a covering 25C, in particular a shield, assigned to the holder 25. However, other constructive solutions are also possible here.

Preferably the apparatus 23 and/or installation 1 is designed in such a way that the protective layer 5A can be surface-treated, in particular by plasma irradiation, in order to modify the protective layer 5A before the actual blocking and/or application of the block material 4 in such a way that a particularly good adhesion of the block material 4 to the protective layer 5A is made possible or ensured. Most preferred this plasma irradiation is carried out in the first work space 26 or any other work space of the apparatus 23 and/or the installation 1. The plasma irradiation is preferably carried out shortly and/or immediately before the blocking of the lens 2.

The protective layer 5A is preferably applied with the block side 2A facing downwards. This is beneficial for a defined run-off and/or the realization of a very thin layer thickness of the protective layer 5A and/or facilitates the discharge and return of excess adhesive 28 for reuse.

Most preferred is the application of the protective layer 5A and/or the adhesive 28 in liquid state with a viscosity and/or processing viscosity, in particular a dynamic viscosity and/or shear viscosity, of more than 100 mPa·s, in particular more than 200 mPa·s, and/or less than 5000 mPa·s, in particular less than 1000 mPa·s or 800 mPa·s. The (dynamic) viscosity at the preheating temperature and/or the temperature in the first work space 26 and/or the processing viscosity of the adhesive 28 and/or the protective layer 5A is thus preferably more than 100 mPa·s, in particular more than 200 mPa·s, and/or less than 5000 mPa·s, in particular less than 1000 mPa·s or 800 mPa·s. This has proved to be particularly advantageous with regard to uniform formation of the protective layer 5A.

The viscosity can be determined in particular by a method according to DIN EN ISO 2431:2012-03 or DIN EN ISO 2555:2000-01. To determine the processing viscosity, the measurement must be carried out at the above-mentioned processing and/or preheating temperature and/or the temperature in the first work space 26, in particular at a minimum of 40 °C and/or a maximum of 80 °C.

The processing viscosity of adhesive 28 is preferably adjusted by heating the adhesive 28. In particular to adjust the preferred range of processing viscosity from 200 mPa·s to 1000 mPa·s, the adhesive 28 is heated to a temperature in the range 40 °C to 80 °C.

At a room temperature and/or a temperature in the range of 21 °C to 23 °C, the (dynamic) viscosity of adhesive 28 is correspondingly higher and/or the (dynamic) viscosity of adhesive 28 is more than 6000 mPa·s, in particular more than 7000 mPa·s, and/or less than 18000 mPa·s, in particular less than 16000 mPa·s.

Most preferred, the thickness of the protective layer 5A is less than 0.5 mm, in particular less than 0.2 mm, most preferred about 0.1 mm. Accordingly, very expensive materials and/or adhesives can also be used, as the material consumption is very low.

Most preferred, the protective layer 5A comprises a greater elasticity than lens 2. The E-modulus (modulus of elasticity/Young's modulus) of lens 2 and/or the lens material is preferably at least by a factor of 2 or 5, most preferred at least by a factor of 10, greater than the E-modulus of the (hardened) protective layer 5A.

The proposed installation 1 preferably comprises a blocking apparatus 6 for blocking - i. e. temporarily fastening - a lens 2 to be processed to an associated block piece 3 by means of the block material 4.

The installation 1 preferably comprises one or more processing apparatuses 7, 9 for processing the lenses 2, which are in particular blocked.

The processing apparatuses 7, 9 are designed in particular as separate processing apparatuses and/or for independent processing of the lenses 2.

The processing apparatuses 7, 9 serve in particular for different processes. Furthermore, preferably some or several additional processing apparatuses 7, 9 are designed for the same processing in order to achieve a higher throughput and/or redundancy in case of failure of a processing apparatus 7, 9, taking into account the time required for one processing.

The processing apparatuses 7, 9 enable, for example, processing in a shaping manner, in particular mechanical and/or cutting or milling processing of a flat side or optically active side of lenses 2, an edge processing of lenses 2, a polishing of lenses 2, a testing and/or measuring of lenses 2, a marking of lenses 2 and/or a coating of lenses 2.

If necessary, several processing apparatuses 7, 9, for example two or more processing apparatuses 7, 9 for the same process, may also be available and/or integrated in installation 1. For example, several processing apparatuses 7 for processing in a shaping manner and/or several processing apparatuses 7 for polishing may be provided. This depends in particular on the throughput of the different processing apparatuses 7 and/or the desired processes.

A particular advantage of the proposed installation 1 is that additional processing apparatuses 7, 9 can be integrated and/or incorporated into installation 1 very easily at a later date as required, so that expansions can be made very easily.

Most preferred is that several processing apparatuses 7, 9 form a processing line B.

The proposed installation 1 preferably comprises one or more processing lines B. In particular, installation 1 comprises at least one processing line B1 for processing blocked lenses 2, in particular for processing at least one flat side in a shaping manner and/or for polishing, and preferably at least one additional processing apparatus 9 and/or processing line B3 for further processing of unblocked lenses 2, in particular for cleaning, coating, edge processing, testing and/or packaging. In the illustration example, installation 1 comprises two processing lines B1 and B2 for processing blocked lenses 2 and one processing line B3 for further processing of unblocked lenses 2.

The installation 1 preferably comprises at least one de-blocking apparatus 8 for de-blocking the lenses 2 which have in particular already undergone at least one processing, i. e. for separating and/or detaching the lenses 2 from the associated block piece 3. In the example shown, installation 1 preferably comprises several, in this case two, de-blocking apparatuses 8.

The de-blocking takes place in particular after the processing in a shaping manner of at least one flat side and/or optically active side of the lenses 2 and after the polishing and/or before the coating and/or before the edge processing of the lenses 2.

The de-blocking apparatus 8 is most preferred and/or the de-blocking apparatus 8 is arranged subsequent to/downstream of the processing line B1, B2 for processing blocked lenses 2 and/or is arranged upstream of/prior to the processing line B3 for processing blocked lenses 2 or is integrated into the processing line B1, B2 or into the processing line B3.

After or during the de-blocking, a removal of the protective layer 5A from the lenses 2 is also carried out. For this purpose, the installation 1 and/or de-blocking apparatus 8 preferably comprises an apparatus 24, as indicated schematically. The device 24 for removing the protective layer 5A is in particular integrated in the de-blocking apparatus(es) 8, but can also be designed as a separate apparatus 24 and/or integrated in the subsequent and/or additional processing or processing line B3.

The removal of the protective layer 5A from the lenses 2 is preferably carried out by means of a fluid jet, most preferred by means of a liquid jet and/or water jet.

The fluid jet preferably acts on the edge and/or the peripheral surface of the protective layer 5A and/or lens 2.

Tests have shown that the removal and/or detachment/releasing of the protective layer 5A is facilitated or supported if the blocked lens 2 has been polished beforehand, as the usually aqueous polishing agent can already penetrate partially into the boundary layer between block side 2A and protective layer 5A at the edges, thus leading to a partial lifting/removal of the protective layer 5A.

The protective layer 5A is most preferred to be removed and/or peeled off at least substantially in one piece by the fluid jet attacking from the side. This is achieved in particular by ensuring that the protective layer 5A is designed to be sufficiently thin and flexible and/or elastic. This is beneficial for a quick and complete removal and/or detachment of the protective layer 5A.

Furthermore, an additional cleaning of the blocked lenses 2 in the de-blocking apparatus 8 and/or apparatus 24 can be carried out, or cleaning of the lenses 2 in the de-blocking apparatus 8 and/or apparatus 24, which is sufficient and/or adapted for a subsequent coating of the lenses 2.

After the de-blocking (this shall also include the removal of the protective layer 5A), the blocked lenses 2 are preferably subjected to further processing and/or finishing/finish processing, in particular a cleaning, a coating, an edge processing most preferred for adaptation to a spectacle frame and/or a spectacle mount, a testing or the like, here in particular by the additional processing apparatus 9 and/or additional processing line B3. Finally, a delivery of the finished processed lenses 2 takes place.

Preferably lenses 2 are temporarily provided with a cover layer 5B before a coating/being coated and/or for the coating. The cover layer 5B is preferably designed similar or identical to the protective layer 5A. The difference between the cover layer 5B and the protective layer 5A is preferably essentially that the protective layer 5A is applied to the lens 2, in particular its block side 2A, before the blocking and/or for the processing/machining in a shaping manner and the cover layer 5B is applied to cover one flat side before the coating of the lens 2 to ensure that only one flat side of the lens 2 is coated and that no coating is applied to the flat side of the lens 2 covered by the cover layer 5B.

When manufacturing a lens 2, it is preferred that a first flat side 2B is first machined/processed in a shaping manner and coated afterwards.

During the machining/processing in a shaping manner, the lens 2 is preferably blocked with a second flat side on a block piece 3. The second flat side therefore preferably corresponds to the block side 2A and is accordingly referred to in the following as "second flat side 2A".

Before coating the lens 2, in particular the first flat side 2B, the block piece 3 is preferably removed/detached. The coating of the lens 2 with a permanent coating is therefore preferably carried out without blocks/without a block.

However, it is not mandatory that the lens 2 is blocked with a block piece 3 and/or held by a block piece 3 during the processing in a shaping manner. In principle, processing in a shaping manner can also be carried out without blocks.

Preferably, however, the second flat side 2A of lens 2 is temporarily provided with a protective layer 5A for machining/processing the first flat side 2B, as described before. This can prevent damage to the second flat side 2A and/or block side 2A by the blocking. In other words, preferably the second flat side 2A and/or block side 2A is blocked for processing the first flat side 2B on a block piece 3 by means of a block material 4 and de-blocked from the block piece 3 after the processing, wherein the second flat side 2A is provided with the protective layer 5A before the blocking.

In principle, it would also be conceivable not to de-block the protective layer 5A already applied to the lens 2, but to leave the protective layer 5A on the lens 2 for coating. However, it has been found that after de-blocking, the protective layer 5A often comprises slight damage and/or is no longer completely intact, so that no satisfactory cover of the second flat side 2A is achieved. Accordingly, it is advantageous to remove the protective layer 5A and afterwards apply the cover layer 5B.

The protective layer 5A is preferably removed after the processing of the first flat side 2B and/or after de-blocking and/or before coating the first flat side 2B.

The cover layer 5B is preferably applied after the processing the first flat side 2B and/or after the removal of the protective layer 5A.

Most preferred is to remove the cover layer 5B after coating of the first flat side 2B.

The properties of the cover layer 5B preferably correspond to the properties of the protective layer 5A. Furthermore, the cover layer 5B is preferably applied and/or removed using the same methods as the protective layer 5A. The relevant explanations regarding the protective layer 5A therefore also correspond to the cover layer 5B.

The installation 1 preferably comprises a delivery apparatus 10 for packaging, marking, intermediate storage and/or delivery of the - preferably finished - processed lenses 2. Fig. 5 schematically indicates that the lenses 2 can be dispensed/released and/or delivered as (finished) edge-processed (i. e. adapted to a spectacle frame) lenses 2 or as lenses 2 not yet edge-processed and/or not yet adapted to a spectacle frame, depending on the requirements and/or processing carried out.

The edge processing of the lenses 2 for adaptation to a spectacle frame, a packaging and/or a quality assurance and/or inspection of the lenses 2 can and/or can optionally be carried out during further processing, in or after delivery apparatus 10 and/or installation 1, if necessary also later and/or separately.

The installation 1 preferably comprises at least one transport system 11 for the transport of lenses 2 and/or transport carriers 12 with the lenses 2 to and from the processing apparatuses 7, 9 and/or processing lines B.

The transport system 11 conveys the lenses 2 and/or transport carriers 12 in particular from the blocking apparatus 6 to the processing apparatuses 7 and/or at least one processing line B1 or B2 and from there to at least one de-blocking apparatus 8 and in particular and/or optionally to additional processing apparatuses 9 and/or the (further) processing line B3 and/or to the delivery apparatus 10, as shown schematically in Fig. 5 and/or by the arrows indicating the conveyance.

The transport system 11 is in particular composed of several conveying apparatuses, such as conveyor belts, manipulation devices or the like.

The transport system 11 is designed in particular in such a way that it allows the optional conveyance of the lenses 2 and/or transport carriers 12 to and from the individual processing lines B1 to B3, the individual processing apparatuses 7, 9 of a processing line B1, B2, B3 and/or the de-blocking apparatuses 8. Finally, the transport system 11 enables the lenses 2 and/or transport carriers 12 to be conveyed to the at least one delivery apparatus 10.

The transport carriers 12 are preferably box-like and/or open at the top and/or designed for loose reception and/or holding of the lenses 2 and/or block pieces 3.

Optionally, the transport carriers 12 are each provided with an information carrier 22 for providing information about the lenses 2 and/or block pieces 3 transported by the transport carrier 12. The information contains in particular all the data essential for processing and/or makes it possible to retrieve the data required for processing, for example via a system control, database or other administration of installation 1 and/or an associated lens management system or the like.

The installation 1 preferably comprises a commissioning apparatus 14 for the in particular fully or partially automated loading of the transport carriers 12 with lenses 2 and block pieces 3 to be processed. The commissioning apparatus 14 is arranged upstream of/before the blocking apparatus 6.

In particular the transport system 11 conveys transport carriers 12 equipped with lenses 2 and block pieces 3 from the commissioning apparatus 14 to the blocking apparatus 6.

As proposed, the installation 1 comprises the apparatus 23 for the application of the protective layer 5A to the lens 2 and/or its block side 2A. This apparatus 23 is preferably placed downstream of/after the commissioning apparatus 14 and/or upstream of/before the blocking apparatus 6.

The apparatus 23 can be integrated in the commissioning apparatus 14 and/or blocking apparatus 6 or designed as a separate apparatus as indicated in Fig. 3. In the latter case, the transport system 11 preferably conveys the lenses 2, in particular by means of the transport carriers 12, first to the device 23 for the application of the protective layer 5A and then on from this again, in particular to the blocking apparatus 6. Thus, most preferred is the conveyance of the loaded transport carriers 12 from the commissioning apparatus 14 to the device 23 and afterwards to the blocking apparatus 6. However, it is basically also possible that the device 23 is integrated differently into the installation 1, for example that it is arranged upstream of/before the commissioning apparatus 14.

In the blocking apparatus 6, the lens 2 and the associated block piece 3 are preferably removed automatically and blocked in the desired way. Afterwards the same or a different transport carrier 12 is loaded again with the blocked lens 2 from the blocking apparatus 6.

In the representation example, the transport carrier 12 preferably carries a lens pair 2, in particular for forming two spectacle lenses of a pair of spectacles/glasses, and two associated block pieces 3. Correspondingly, after the blocking, the transport carrier 12 is preferably again equipped by the blocking apparatus 6 with two blocked lenses 2 belonging to a pair of spectacles.

It should be noted that the installation 1 can also comprise several blocking apparatuses 6, which are, for example, optionally or depending on the utilization or design, loaded and/or supplied with the lenses 2 to be blocked and/or transport carriers 12 provided with them by the transport system 11.

Most preferred, the transport carriers 12 are returned again after the use thereof by means of a (first) return conveying apparatus 15 and are automatically loaded with lenses 2 (in particular thus lens preforms) to be processed and optionally block pieces 3. In the example shown here, this is done most preferred in or by means of the commissioning apparatus 14.

Alternatively, however, it is also possible that the transport carriers 12 are returned to the blocking apparatus 6 after use and/or by means of a return conveying apparatus 15, as indicated by the dashed lines in Fig. 5. In this case the commissioning apparatus 14 can be omitted. The transport carriers 12 are then loaded in the and/or from the blocking apparatus 6, preferably automatically with the lenses 2 already blocked.

Most preferred is the loading of the transport carriers 12 automated in the commissioning apparatus 14.

The lens preforms and/or lenses 2 to be processed are preferably provided by a storage apparatus 16 of the installation 1, in particular fed to the commissioning apparatus 14. The storage apparatus 16 may in particular be directly coupled to or integrated into the commissioning apparatus 14.

In particular, an unpacking of the lenses 2 and/or lens preforms can be partially or fully automated in the and/or by the storage apparatus 16 or commissioning apparatus 14.

The de-blocked and/or used block pieces 3 are preferably automatically conveyed back again/returned from the de-blocking apparatus 8 and/or from each de-blocking apparatus 8, here in particular to the commissioning apparatus 14.

In the example shown here, the back conveyance/conveying is preferably carried out by means of an (additional) return conveying apparatus 17 for block pieces 3 as indicated in Fig. 5.

Most preferred is to clean the block pieces 3 after de-blocking, i. e. after use, and in particular to visually check, sort and/or temporarily store them. This can be done in particular in the de-blocking apparatus 8 and/or by means of a separate apparatus 18, which is indicated schematically in Fig. 5, and/or in the commissioning apparatus 14.

Most preferred is that the cleaning, in particular the removal of block material 4, takes place in the (respective) de-blocking apparatus 8.

The preferably visual inspection of the block pieces 3, in particular for complete removal of the block material 4, damage or the like is most preferred to be carried out in the de-blocking apparatus 8 or apparatus 18.

Sorting or checking the block pieces 2, in particular according to size and/or shape, is carried out most preferably in the blocking apparatus 6, the de-blocking apparatus 8, the apparatus 18 and/or the commissioning apparatus 14.

The optional intermediate storage of the block pieces 3 is most preferred in the de-blocking apparatus 8, the apparatus 18 and/or the commissioning apparatus 14.

If the intermediate storage takes place in the de-blocking apparatus 8 or apparatus 18, corresponding or necessary and/or suitable block pieces 3 are in particular fed to the commissioning apparatus 14 upon corresponding request of the blocking apparatus 6 and/or commissioning apparatus 14 and/or as required and/or controlled by a not shown lens management system of the installation 1 etc.

The commissioning apparatus 14 then places the lenses 2 to be processed and the block pieces 3 in particular from above and/or loose/loosely in the transport carriers 12.

Alternatively, it is also possible to feed the blocked block pieces 3 directly to the blocking apparatus 6, as indicated by the dotted lines in Fig. 5.

In the first version shown in Fig. 5 the transport carriers 12 are preferably first delivered and/or released by the delivery apparatus 10 and then returned/conveyed back from there.

The released transport carriers 12 are preferably cleaned, provided with other information and/or other information carriers 22, in particular visually checked and/or temporarily stored. This can be done in particular in an apparatus 19 assigned and/or separate from the return conveying apparatus 15.

In particular the cleaning of the transport carriers 12 is carried out in the delivery apparatus 10, the apparatus 19, the commissioning apparatus 14, the blocking apparatus 6 and/or the de-blocking apparatus 8.

The preferably optical inspection of the transport carriers 12, in particular with regard to a successfully performed cleaning or necessary cleaning, to the exchange or removal of the information carriers 22, to damages, contamination or the like, is preferably performed in the delivery apparatus 10, the apparatus 19, the commissioning apparatus 14, the blocking apparatus 6 and/or the de-blocking apparatus 8.

An optional intermediate storage of the transport carriers 12 takes place in particular in the delivery apparatus 10, the apparatus 19 and/or the commissioning apparatus 14. Alternatively or additionally, the return conveying apparatus 15 can enable a corresponding intermediate storage, for example by a circular conveyance of the transport carriers 12 and an on-demand diversion/exit of the corresponding transport carriers 12 for further conveyance to the commissioning apparatus 14.

Most preferred is therefore in particular a circular conveyance or a (first) cycle K1 of transport carriers 12 enabled or realized.

Most preferred is therefore a circular conveyance or a (third and/or further) cycle K3 of the block pieces 3 is enabled or realized.

The de-blocking apparatus 8 and/or apparatus 24 for removing the protective layer 5A is preferably (in each case) followed by an apparatus 23 for the application of the cover layer 5B. The apparatus 23 for the application of the cover layer 5B is preferably designed identically to the apparatus 23 for the application of the protective layer 5A.

The coating line and/or additional processing line B3 is preferably followed by an additional apparatus 24 for removing the cover layer 5B. The apparatus 24 for removing the cover layer 5B is preferably designed identically to the apparatus 24 for removing the protective layer 5A.

The apparatus 23 for the application of the cover layer 5B is preferably arranged upstream of/before the coating line and/or additional processing line B3.

In general, the information carriers 22 are preferably read, used, changed and/or adapted by the processing apparatuses 7, 9. For example, current processing statuses and/or properties relating to lenses 2 and/or block pieces 3 can be stored or made available.

Most preferred, the information and/or information carriers 22 contain an order number by means of which all essential information about the respective lenses 2 and/or block pieces 3 and/or all information essential for the processing and/or a processing status or the like of individual apparatuses, in particular the processing apparatuses 7, 9 performing the processing, can be called up. This information is managed, held and/or retrieved, for example, by a lens management system, a database or the like which is not displayed.

It should be noted that conveying, in particular by the transport system 11 and/or the return conveying apparatuses 15, 17 and/or 20 most preferred, is fully automated, but can also be partially automated.

In general, it should be noted that the proposed methods and proposed installations 1 allow in particular for a circulation and/or optional feeding of lenses 2 and/or lens carriers 12 to the individual processing apparatuses 7, 9 and/or various processing lines B, as described in particular in WO 2013/131656 A2 and/or WO 2017/0806639 A1.

Individual aspects and features of the described installation 1, apparatus 23 as well as the described sequences, methods and various design examples can also be implemented independently of each other, but also in any combination.

Further aspects of the present invention which can be realized independently of each other, but also in combination with the aspects/features explained before, are in particular:
1. Method for processing lenses 2, in particular spectacle lenses, wherein each lens 2 is blocked for the processing on a block piece 3 by means of a block material 4 on a block side 2A and after the processing is de-blocked from the block piece 3 again, wherein the block side 2A is provided with a removable protective layer 5 before the blocking,
   **characterized**
   in that the protective layer 5 is applied by rotation coating, and/or
   the protective layer 5 is formed from an adhesive 28 which is cured before the blocking and/or application of the block material 4.
2. Method according to aspect 1, characterized in that the protective layer 5 is applied with the block side 2A facing downwards.
3. Method according to aspect 1 or 2, characterized in that the protective layer 5 is applied in liquid form with a viscosity of more than 100 mPa·s and/or that the viscosity of the adhesive 28 is more than 200 mPa·s and/or less than 1000 mPa·s or 800 mPa·s.
4. Method according to one of the preceding aspects, characterized in that a UV adhesive 28 is used to form the protective layer, which is cured by means of UV radiation U, preferably wherein the wavelength of the UV radiation U is in the range from 200 nm to 450 nm.
5. Method according to one of the preceding aspects, characterized in that the adhesive 28 is cured in/under an inert atmosphere.
6. Method according to one of the preceding aspects, characterized in that the thickness of the protective layer 5 is less than 0.5 mm, in particular less than 0.2 mm, and/or more than 0.05 mm.
7. Method according to one of the preceding aspects, characterized in that the lens 2 is rotated at different rotational speeds during the rotation coating, in particular is first accelerated to an initial rotational speed and rotated at the initial rotational speed and then accelerated to at least one different rotational speed and rotated at this rotational speed.
8. Method according to one of the preceding aspects, characterized in that the blocked lenses 2 are processed by one or more processing apparatuses 7, 9.
9. Method according to one of the preceding aspects, characterized in that the protective layer 5 and/or the adhesive 28 is applied to the lens 2 in a first work space 26 and is cured by UV radiation in a separate second work space 30.
10. Method according to one of the preceding aspects, characterized in that the protective layer 5 and/or the adhesive 28 is applied to the lens 2 in/under an inert atmosphere.
11. Method according to aspect 9 or 10, characterized in that the lens 2 with the applied protective layer 5 is transported in/under an inert atmosphere from the first work space 26 to/into the second work space 30.
12. Method according to one of the preceding aspects, characterized in that the protective layer 5 and/or the adhesive 28 is cured in/under an inert atmosphere.
13. Method according to one of the preceding aspects, characterized in that the protective layer 5 is removed/detached or peeled off again after the processing of the lenses 2, in particular by means of a fluid jet.
14. Apparatus 23 for the application of a removable/detachable protective layer 5 to a block side 2A of a lens 2, in particular of a spectacle lens, for the subsequent blocking of the lens 2,
   **characterized**
   in that the apparatus comprises 23:
   a holding device/holder 25 for rotatably holding the lens 2 with the block side 2A preferably facing downwards,
   an application device 27 for the application of an adhesive 28 to form the protective layer 5, and
   a curing device 31 for curing the protective layer 5 formed from the adhesive 28 by UV radiation U.
15. Apparatus according to aspect 14, characterized in that the apparatus 23 comprises a first work space 26 for the application of an adhesive 28 and a separate second work space 30 for curing the protective layer 5 formed from the adhesive 28 by UV radiation U by means of the curing device 31.
16. Apparatus according to aspect 14 or 15, characterized in that the holder 25 is designed for holding the lens 2 in rotation at different rotational speeds, in particular in such a way that the lens 2 can first be accelerated to an initial rotational speed and can be rotated at the initial rotational speed and can then be accelerated to at least one different rotational speed and can be rotated at this rotational speed.
17. Installation 1 for processing/machining lenses 2, in particular spectacle lenses,
   with an apparatus 23 for application of a removable/detachable protective layer 5 to a block side 2A of a lens 2 to be processed,
   with a blocking apparatus 6 for blocking the lens 2 provided with the protective layer on a block piece 3 by means of a block material 4,
   with one or more processing apparatuses 7, 9 for processing the lens 2, and
   with a de-blocking apparatus 8 for blocking off the processing lens 2 and detachment of the protective layer 5,
   **characterized**
   in that for the application of the removable protective layer 5 the apparatus 23 comprises:
   a holding device/holder 25 for rotatably holding the lens 2 with the block side 2A facing downwards, and
   an application device 27 for the application of a liquid material or an adhesive 28 to form the protective layer 5.
18. Installation according to aspect 17, characterized in that the apparatus 23 is designed for the application of the removable protective layer 5 according to one of aspects 14 to 16.
19. Use of a UV adhesive 28 for blocking lenses 2, in particular spectacle lenses, wherein each lens 2 is blocked for processing on a block piece 3 by means of a block material 4 on a block side 2A and is de-blocked from the block piece 3 after the processing, wherein the block side 2A is provided with a removable/detachable protective layer 5 before the blocking,
   **characterized**
   in that the protective layer 5 is formed from the UV adhesive 28, which is cured by UV radiation U before the blocking and/or application of the block material 4.
20. Method for manufacturing lenses (2), especially spectacle lenses,
   wherein each lens (2) is blocked for a processing on a block piece (3) by means of a block material (4) on a block side (2A) and is de-blocked from the block piece (3) after the processing, and
   wherein the block side (2A) is provided with a removable protective layer (5A) before the blocking,
   **characterized**
   in that the protective layer (5A) is applied by means of rotation coating, wherein the protective layer (5A) is formed from an adhesive (28) which is cured before the blocking and/or application of the block material (4) in particular by means of electromagnetic radiation.
21. Method according to aspect 20, characterized in that the adhesive (28) is applied and/or cured in/under an inert atmosphere, preferably wherein the atmosphere is at least substantially formed by argon, nitrogen and/or carbon dioxide.
22. Method according to aspect 21 or 22, characterized in that the electromagnetic radiation is UV radiation (U) and/or has a wavelength of more than 100 nm, preferably more than 200 nm, in particular more than 280 nm, and/or less than 480 nm, preferably less than 450 nm, in particular less than 430 nm.
23. Method according to one of aspects 20 to 22, characterized in that the protective layer (5A) and/or the block material (4) is/are irradiated with electromagnetic radiation and/or plasma radiation prior to the application of the block material (4) in order to enable or improve mutual adhesion.
24. Method according to one of aspects 20 to 23, characterized in that the lens (2) is rotated at different rotational speeds during the rotation coating, in particular the lens (2) being first accelerated to an initial rotational speed during the application of the adhesive (28) and rotated at the initial rotational speed and then accelerated to at least one different rotational speed and rotated at this rotational speed, preferably wherein the lens (2) is rotated during curing at a curing rotational speed.
25. Method according to one of aspects 20 to 24, characterized in that two lenses (2) of a lens pair are each simultaneously provided with the protective layer (5A).
26. Method for manufacturing a lens (2), in particular a spectacle lens,
   wherein a first flat side (2B) of the lens (2) is manufactured in a shaping manner, in particular processed/machined and/or cast, and coated, and
   wherein a second flat side (2A) of the lens (2) is temporarily provided with a cover layer (5B) for the coating of the first flat side (2B).
27. Method according to one of aspects 20 to 26, characterized in that the second flat side (2A) of the lens (2) is temporarily provided with a protective layer (5A) for the manufacturing and/or processing of the first flat side (2B).
28. Method according to aspect 27, characterized in that the second flat side (2A) is blocked by means of a block material (4) for the manufacturing and/or processing of the first flat side (2B) on a block piece (3) and is de-blocked again from the block piece (3) after the manufacturing and/or processing, wherein the second flat side (2A) is provided with the protective layer (5A) before the blocking.
29. Method according to aspect 27 or 28, characterized in that the protective layer (5A) is removed after the manufacturing and/or processing of the first flat side (2A) and/or after the de-blocking and/or before the coating of the first flat side (2B).
30. Method according to aspect 29, characterized in that the cover layer (5B) is applied after the manufacturing and/or processing of the first flat side (2B) and/or after removing the protective layer (5A).
31. Method according to one of aspects 27 to 30, characterized in that the cover layer (5B) is removed after coating the first flat side (2B).
32. Method according to one of aspects 26 to 31, characterized in that the cover layer (5B) and/or the protective layer (5A) is/are applied by rotation coating.
33. Method according to one of aspects 26 to 32, characterized in that the cover layer (5B) and/or the protective layer (5A) is/are formed from an adhesive (28) preferably being cured by means of electromagnetic radiation, in particular UV radiation (U).
34. Method according to one of aspects 26 to 33, characterized in that the cover layer (5B) and/or the protective layer (5A) is/are formed from an adhesive (28) being cured under/in an inert atmosphere and/or with the lens (2) rotating.
35. Apparatus (23) for manufacturing lenses (2), in particular spectacle lenses, comprising:
   a receiving station (34) for receiving lenses (2),
   a delivery station (35) for delivering lenses (2),
   one or more work stations (36, 37) for manufacturing, in particular coating, lenses (2), and
   a handling device (38) for handling the lenses (2) in the apparatus (23) and for the transport of the lenses (2) between different stations (34-37) of the apparatus (23).
36. Apparatus according to aspect 35, characterized in that the handling device (38) is arranged centrally between and/or equidistant to a plurality of stations (34-37) and/or that a plurality of stations (34-37) is arranged on a circular path around the handling device (38).
37. Apparatus according to aspect 35 or 36, characterized in that the handling device (38) comprises a lens carrier (39) for the lenses (2), which is rotatable around a preferably vertical rotary axis (D1), so that the lenses (2) can be transported from one of the stations (34-37) to a following/subsequent additional station (34-37) by rotation of the lens carrier (39) around the rotary axis (D1) and/or so that the lenses (2) can be moved at least in sections on a circular path.
38. Apparatus according to one of aspects 35 to 37, characterized in that the handling device (38) comprises a lens carrier (39) for the lenses (2), which is designed in a star shape and/or comprises a plurality of arms (40), preferably at least four, arranged radially relative to a rotary axis (D1) of the handling device (38).
39. Apparatus according to aspect 38, characterized in that the arms (40) of the lens carrier (39) each comprise one or more holders (25) for holding a lens (2) and/or a lens pair, preferably wherein the holder(s) (25) is/are arranged on a lower side of the respective arm (40) and/or is/are designed for rotatably holding a lens (2) or a lens pair.
40. Apparatus according to one of aspects 37 to 39, characterized in that the lens carrier (39) comprises at least one covering (25C) for covering work stations (36, 37).
41. Apparatus according to one of aspects 35 to 40, characterized in that the receiving station (34) and/or the delivery station (35) comprises a turning device (41, 45) for turning the lenses (2).
42. Apparatus according to one of aspects 35 to 41, characterized in that the receiving station (34) comprises a centering device (42) for centering the lenses (2).
43. Apparatus according to one of aspects 35 to 42, characterized in that one of the work stations (37) is designed for applying a protective layer (5A) and/or cover layer (5B) by rotation coating and preferably one other of the work stations (36, 37) is designed for curing the protective layer (5A) and/or cover layer (5B) by means of electromagnetic radiation, in particular UV radiation (U).
44. Apparatus according to one of aspects 35 to 43, characterized in that the apparatus (23) comprises a heating device (29) for preheating the lenses (2), an adhesive (28), an application device (27), a pump (27A), a prechamber, a nozzle and/or a work space (26, 30).
45. Apparatus according to one of aspects 35 to 44, characterized in that the apparatus (23) comprises a conveying device (13) for conveying transport carriers (12) for the lenses (2) from the receiving station (34) to the delivery station (35) during a processing and/or coating of lenses (2) in the apparatus (23).

### List of reference signs:

- 1: installation
- 2: lens
- 2A: block side/second flat side
- 2B: first flat side
- 3: block piece
- 4: block material
- 5A: protective layer/protective film
- 5B: cover layer
- 6: blocking apparatus
- 7: processing apparatus
- 8: de-blocking apparatus
- 9: additional processing apparatus
- 10: delivery apparatus
- 11: transport system
- 12: transport carrier
- 13: conveying device
- 14: commissioning apparatus
- 15: return conveying apparatus for transport carriers
- 16: storage apparatus
- 17: return conveying apparatus for block pieces
- 18: apparatus
- 19: apparatus
- 20: return conveying apparatus for additional transport carriers
- 21: optional apparatus
- 22: information carrier
- 23: apparatus for applying the protective layer/cover layer
- 24: apparatus for removing the protective layer/cover layer
- 25: holder
- 25A: gripper
- 25B: rotary actuator
- 25C: covering
- 26: first work space
- 27: application device
- 27A: pump
- 27B: feed
- 27C: tank
- 28: adhesive
- 29: heating device
- 30: second work space
- 31: curing device
- 32: bottom of the second work space
- 33: reflector
- 34: receiving station
- 35: delivery station
- 36: first work station
- 37: second work station
- 38: handling device
- 39: lens carrier
- 40: arms
- 41: turning device (receiving station)
- 41A: gripper
- 41B: bar
- 42: centering device
- 42A: centering jaws
- 43: gripping device (receiving station)
- 44: rail
- 45: turning device (delivery station)
- 45A: gripper
- 45B: first bar
- 45C: second bar

- B: processing line
- B1: first processing line
- B2: second processing line
- B3: additional processing line
- D: rotary axis (rotary actuator)
- D1: rotary axis (lens carrier)
- K1: first cycle
- K3: additional cycle
- P1: receiving position
- P2: delivery position
- S: adhesive jet
- S1: axis (turning device receiving station)
- S2: axis (turning device delivery station)
- U: UV radiation
- X: axis (delivery station)

## Claims

1. Method for manufacturing lenses (2), especially spectacle lenses,
wherein each lens (2) is blocked for processing on a block piece (3) by means of a block material (4) on a block side (2A) and is de-blocked from the block piece (3) after the processing, and
wherein the block side (2A) is provided with a removable protective layer (5A) before the blocking,
**characterized**
**in that** the protective layer (5A) is applied by means of rotation coating, wherein the protective layer (5A) is formed from an adhesive (28) which is cured before the blocking and/or application of the block material (4) in particular by means of electromagnetic radiation.

2. Method according to claim 1, **characterized in that** the adhesive (28) is applied and/or cured in/under an inert atmosphere, preferably wherein the atmosphere is at least substantially formed by argon, nitrogen and/or carbon dioxide.

3. Method according to claim 1 or 2, **characterized in that** the electromagnetic radiation is UV radiation (U) and/or has a wavelength of more than 100 nm, preferably more than 200 nm, in particular more than 280 nm, and/or less than 480 nm, preferably less than 450 nm, in particular less than 430 nm.

4. Method according to one of the preceding claims, **characterized in that** the protective layer (5A) and/or the block material (4) is/are irradiated with electromagnetic radiation and/or plasma radiation prior to the application of the block material (4) in order to enable or improve mutual adhesion.

5. Method according to one of the preceding claims, **characterized in that** the lens (2) is rotated at different rotational speeds during the rotation coating, in particular the lens (2) being first accelerated to an initial rotational speed during the application of the adhesive (28) and rotated at the initial rotational speed and then accelerated to at least one different rotational speed and rotated at this rotational speed, preferably wherein the lens (2) is rotated during curing at a curing rotational speed.

6. Method according to one of the preceding claims, **characterized in that** two lenses (2) of a lens pair are each simultaneously provided with the protective layer (5A).

7. Apparatus (23) for manufacturing lenses (2), in particular spectacle lenses, comprising:
a receiving station (34) for receiving lenses (2),
a delivery station (35) for delivering lenses (2),
one or more work stations (36, 37) for manufacturing, in particular coating, lenses (2), and
a handling device (38) for handling the lenses (2) in the apparatus (23) and for the transport of the lenses (2) between different stations (34-37) of the apparatus (23).

8. Apparatus according to claim 7, **characterized in that** the handling device (38) and/or a preferably vertical rotary axis (D1) of the handling device (38) are/is arranged preferably at least essentially centrally between and/or equidistant to and/or surrounded by a plurality of stations (34-37), and/or that a plurality of stations (34-37) is arranged on a circular path around the handling device (38).

9. Apparatus according to claim 7 or 8, **characterized in that** the handling device (38) comprises a lens carrier (39) for the lenses (2),
which is rotatable around the preferably vertical rotary axis (D1),
so that the lenses (2) can be transported from one of the stations (34-37) to a following/subsequent additional station (34-37) by rotation of the lens carrier (39) around the rotary axis (D1) and/or
so that the lenses (2) can be moved at least in sections on an in particular circular path.

10. Apparatus according to one of claims 7 to 9, **characterized in that** the handling device (38) comprises a lens carrier (39) for the lenses (2),
which is designed in a star shape and/or comprises a plurality of arms (40), preferably at least four, arranged radially relative to the rotary axis (D1) of the handling device (38).

11. Apparatus according to claim 10, **characterized in that** the arms (40) of the lens carrier (39) each comprise one or more holders (25) for holding a lens (2) and/or a lens pair, preferably wherein the holder(s) (25) is/are arranged on a lower side of the respective arm (40) and/or is/are designed for rotatably holding a lens (2) or a lens pair.

12. Apparatus according to one of claims 9 to 11, **characterized in that** the lens carrier (39) comprises at least one covering (25C) for covering work stations (36, 37).

13. Apparatus according to one of claims 7 to 12, **characterized**
**in that** the receiving station (34) and/or the delivery station (35) comprises a turning device (41, 45) for turning the lenses (2) and/or
**in that** the receiving station (34) comprises a centering device (42) for centering the lenses (2).

14. Apparatus according to one of claims 7 to 13, **characterized in that** one of the work stations (37) is designed for applying a protective layer (5A) and/or cover layer (5B) by rotation coating and preferably one other of the work stations (36, 37) is designed for curing the protective layer (5A) and/or cover layer (5B) by means of electromagnetic radiation, in particular UV radiation (U).

15. Apparatus according to one of claims 7 to 14, **characterized**
**in that** the apparatus (23) comprises a heating device (29) for preheating the lenses (2), an adhesive (28), an application device (27), a pump (27A), a prechamber, a nozzle and/or a work space (26, 30), and/or
**in that** the apparatus (23) comprises a conveying device (13) for conveying transport carriers (12) for the lenses (2) from the receiving station (34) to the delivery station (35) during a processing and/or coating of lenses (2) in the apparatus (23).
